# EUROPÄISCHE PATENTSCHRIFT

(11) **EP 3 857 172 B1**
(45) Veröffentlichungstag und Bekanntmachung des Hinweises auf die Patenterteilung: **05.07.2023**
(21) Anmeldenummer: 18779339.3
(22) Anmeldetag: 25.09.2018
(51) Int. Cl.: G01D 11/24, H05K 5/06

(54) **SENSORVORRICHTUNG**
SENSOR DEVICE
DISPOSITIF DE CAPTEUR

(43) Veröffentlichungstag der Anmeldung: 04.08.2021
(73) Patentinhaber: Fraba B.V., 6416 SG Heerlen (NL)
(72) Erfinder: FELL, Christian, Robbinsville, New Jersey 08691 (US); PRITZKAU, Dimitri, 53844 Troisdorf (DE)
(74) Vertreter: terpatent Patentanwälte ter Smitten Eberlein-Van Hoof Rütten Daubert
(86) Internationale Anmeldenummer: PCT/EP2018/076007
(87) Internationale Veröffentlichungsnummer: WO 2020/064092

(56) Entgegenhaltungen:
- EP-A2- 2 241 797
- WO-A1-2016/096191
- DE-A1-102010 051 973
- DE-A1-102015 122 218
- DE-A1-102017 129 687

## Beschreibung

Die Erfindung betrifft eine Sensorvorrichtung zur Erfassung einer physikalischen Größe, mit einem Gehäuse, einem Sensormodul, das in dem Gehäuse angeordnet ist, und einer Vergussmasse, die das Gehäuse mindestens teilweise ausfüllt und das Sensormodul umschließt. Ferner betrifft die Erfindung ein Verfahren zur Montage einer derartigen Sensorvorrichtung.

Eine derartige Sensorvorrichtung ist beispielsweise aus der DE 10 2016 201 204 A1 bekannt. Die offenbarte Sensorvorrichtung umfasst ein Gehäuse, in dem ein Sensormodul mit einem bewegungsempfindlichen Sensorelement angeordnet ist. Das Sensormodul liegt unmittelbar an einer Stützvorrichtung des Gehäuses an und ist ferner über einen im Allgemeinen starren Ausgangsanschluss, wie beispielweise ein Pressfit-Pin, mit dem Gehäuse verbunden. Um das Sensormodul vor eindringender Feuchtigkeit zu schützen, ist das Gehäuse mit einer Vergussmasse gefüllt, die das Sensormodul umschließt.

Derartige Sensorvorrichtungen werden häufig in vibrations- und/oder erschütterungsreichen Umgebungen verwendet. Externe Vibrationen und/oder Erschütterungen können bei der aus der DE 10 2016 201 204 A1 bekannten Sensorvorrichtung jedoch über das Gehäuse in das Sensormodul übertragen werden, wodurch die Erfassungsgenauigkeit und/oder Erfassungszuverlässigkeit der Sensorvorrichtung beeinträchtigt werden kann.

Weitere Sensorvorrichtungen sind aus der DE 10 2010 051 973 A1 und aus der DE 10 2017 129687 A1 bekannt.

Es stellt sich daher die Aufgabe, eine Sensorvorrichtung zu schaffen, die eine zuverlässige Erfassung einer physikalischen Größe ermöglicht, insbesondere auch in erschütterungsreichen Umgebungen.

Diese Aufgabe wird durch eine Sensorvorrichtung zur Erfassung einer physikalischen Größe mit den Merkmalen des Hauptanspruchs 1 gelöst.

Erfindungsgemäß ist mindestens ein Befestigungsmittel vorgesehen, über welches das Sensormodul in dem Gehäuse befestigt ist. Vorzugsweise ist das mindestens eine Befestigungsmittel sowohl mit dem Sensormodul als auch mit dem Gehäuse verklebt, um eine zuverlässige Befestigung des Sensormoduls während der Montage der Sensorvorrichtung zu schaffen. Ferner weist die Vergussmasse, mit der das Gehäuse gefüllt ist und die das Sensormodul umschließt, erfindungsgemäß im ausgehärteten Zustand eine Härte auf, die größer ist als die Härte des mindestens einen Befestigungsmittels und geringer ist, als die Härte des Gehäuses. Dadurch, dass die Vergussmasse eine höhere Härte aufweist als das mindestens eine Befestigungsmittel, wird das Sensormodul im Wesentlichen über die Vergussmasse in dem Gehäuse gehalten. Die Härte der Vergussmasse ist hierbei erfindungsgemäß relativ gering, sodass die Vergussmasse als Schwingungsdämpfer für das Sensormodul fungiert und das Sensormodul schwingungstechnisch von dem Gehäuse entkoppelt. Extern eingeprägte Erschütterungen des Gehäuses werden somit nicht oder nur deutlich gedämpft auf das Sensormodul übertragen. Dies erlaubt eine zuverlässige Erfassung der physikalischen Größe durch das bewegungsempfindliche Sensorelement der Sensorvorrichtung, insbesondere auch in erschütterungsreichen Umgebungen. Hierbei kann das bewegungsempfindliche Sensorelement beispielsweise ein Beschleunigungssensor, ein Trägheitssensor oder ein Gyroskop, sein und beispielweise eine Beschleunigung oder Neigung der Sensorvorrichtung erfassen.

In einer bevorzugten Ausführung der Erfindung ist das Sensormodul innerhalb des Gehäuses kontaktfrei zu dem Gehäuse gelagert. Das Sensormodul weist somit keinen direkten Kontakt zu dem Gehäuse auf. Dies ermöglicht eine zuverlässige schwingungstechnische Entkopplung des Sensormoduls von dem Gehäuse und somit eine besonders zuverlässige Erfassung der physikalischen Größe.

Vorteilhafterweise ist in dem Gehäuse mindestens ein Befestigungssockel vorgesehen, an dem das Sensormodul über das mindestens eine Befestigungsmittel befestigt ist. Hierbei entspricht die Anzahl der Befestigungssockel der Anzahl der Befestigungsmittel. Die Befestigungssockel ermöglichen eine zuverlässige Befestigung des Sensormoduls bei der Montage, wobei die vertikal von der Gehäusewand vorstehenden Befestigungssockel dennoch eine besonders effiziente schwingungstechnische Entkopplung des Sensormoduls von dem Gehäuse schaffen.

In einer vorteilhaften Ausführung der Erfindung weist das mindestens eine Befestigungsmittel eine Härte von maximal 45 Shore 00 auf. Vorzugsweise weist das mindestens eine Befestigungsmittel eine Härte im Bereich von 30 Shore 00 bis 40 Shore 00 auf. Die Vergussmasse weist vorteilhafterweise eine Härte im Bereich von mindestens 20 Shore A und maximal 45 Shore A auf. Besonders bevorzugt weist die Vergussmasse eine Härte im Bereich von 25 Shore A bis 40 Shore A auf. Das mindestens eine Befestigungsmittel ist somit signifikant weicher als die Vergussmasse, sodass das Sensormodul nahezu vollständig durch die Vergussmasse gestützt ist. Hierbei ermöglicht die ebenfalls relativ weiche Vergussmasse eine besonders effektive Schwingungsdämpfung. Das Befestigungsmittel kann beispielsweise aus einem viskoelastischen Polyurethan bestehen, und die Vergussmasse kann beispielsweise aus einem Polybutadien bestehen.

In der Vergussmasse kann sich relativ viel Feuchtigkeit einlagern, da die Vergussmasse typischerweise aus einem relativ hydrophilen Material besteht. Zum Schutz vor der Feuchtigkeit ist das Sensormodul vorzugsweise mit einer Schutzschicht beschichtet, um elektrische Kurzschlüsse und/oder eine Korrosion der elektrischen Verbindungen durch die Feuchtigkeit zu verhindern.

Das erfindungsgemäße Verfahren zur Montage einer Sensorvorrichtung nach einem der vorhergehenden Ansprüche umfasst die folgenden Verfahrensschritte:
- Einsetzen des Sensormoduls in das Gehäuse, wobei das Sensormodul über das mindestens eine Befestigungsmittel an dem Gehäuse befestigt wird,
- Anbringen einer Haltevorrichtung, die an einer dem mindestens einen Befestigungsmittel gegenüberliegenden Oberseite des Sensormoduls anliegt und das Sensormodul an das mindestens eine Befestigungsmittel anpresst,
- Einfüllen der Vergussmasse in das Gehäuse,
- Entfernen der Haltevorrichtung.

Hierbei verhindert die Haltervorrichtung ein Verrutschen des Sensormoduls und/oder ein Abheben des Sensormoduls von dem mindestens einen Befestigungssockel während des Einfüllens der Vergussmasse. Insbesondere stellt die Haltevorrichtung auch sicher, dass das Sensormodul keinen unmittelbaren Kontakt zum Gehäuse aufweist. Dies schafft eine effiziente schwingungstechnische Entkopplung des Sensormoduls von dem Gehäuse und ermöglicht dadurch eine exakte und zuverlässige Erfassung der physikalischen Größe durch die erfindungsgemäße Sensorvorrichtung.

Vorzugsweise wird das Sensormodul mindestens beim Einsetzen in das Gehäuse durch eine Positioniervorrichtung zuverlässig und auf einfache Weise ausgerichtet und positioniert. Hierbei wird insbesondere sichergestellt, dass das Sensormodul keinen direkten Kontakt zum Gehäuse aufweist.

Vorteilhafterweise umfasst das Verfahren zur Montage der Sensorvorrichtung die folgenden Verfahrensschritte:
- Einfüllen der Vergussmasse bis eine Sensormodul-Unterseite jedoch nicht die Sensormodul-Oberseite von der Vergussmasse umschlossen ist,
- mindestens teilweises Aushärten der Vergussmasse,
- Entfernen der Haltevorrichtung,
- Einfüllen der Vergussmasse mindestens bis das Sensormodul vollständig von der Vergussmasse umschlossen ist.

Hierbei wird durch das zweistufige Einfüllen der Vergussmasse sichergestellt, dass das Sensormodul beim Entfernen der Haltevorrichtung zuverlässig in dem Gehäuse gehalten wird. Dies verhindert ein Verrutschen des Sensormoduls und/oder ein Abheben des Sensormoduls von dem mindestens einen Befestigungssockel beim Entfernen der Haltevorrichtung.

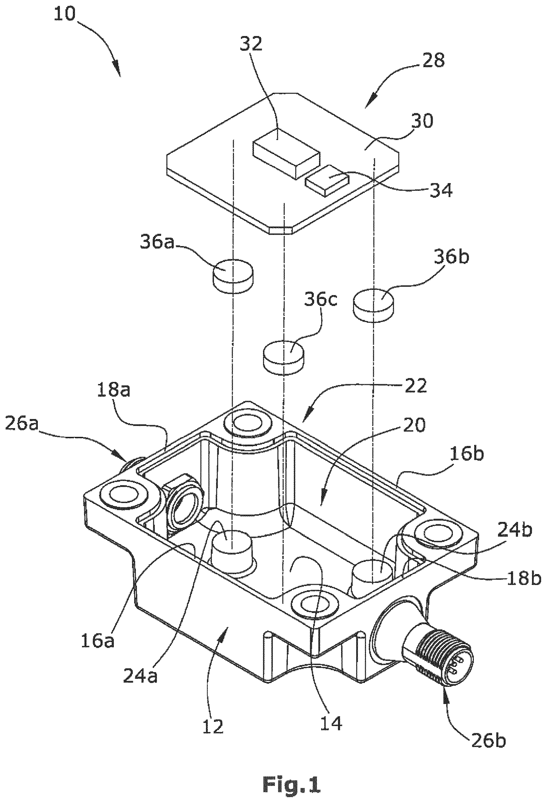

Ein Ausführungsbeispiel einer erfindungsgemäßen Sensorvorrichtung zur Erfassung einer physikalischen Größe wird nachfolgend anhand der beigefügten Figuren beschrieben, wobei
Figur 1 eine Explosionsdarstellung einer erfindungsgemäßen Sensorvorrichtung im unvergossenen Zustand zeigt,

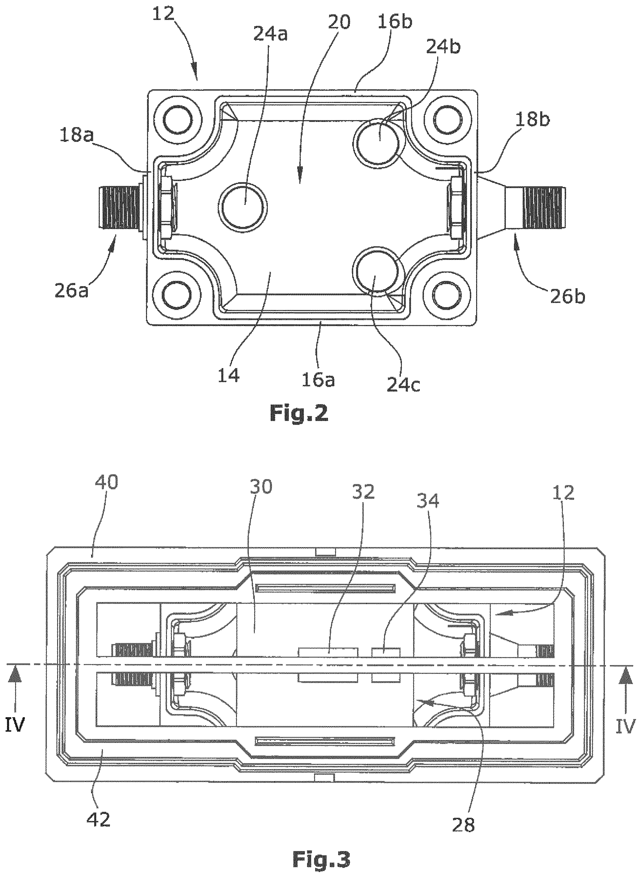

Figur 2 eine Draufsicht auf ein Gehäuse der Sensorvorrichtung aus Figur 1 zeigt,
Figur 3 eine Draufsicht auf die Sensorvorrichtung aus Figur 1 zeigt, wobei an der Sensorvorrichtung eine Positioniervorrichtung und eine Haltevorrichtung angebracht sind,
Figur 4 einen Querschnitt der Sensorvorrichtung aus Figur 3 entlang der Linie IV-IV zeigt, wobei die Positioniervorrichtung entfernt ist und ein Gehäuse der Sensorvorrichtung teilweise mit einer Vergussmasse gefüllt ist, und
Figur 5 die Sensorvorrichtung aus Figur 4 zeigt, wobei die Haltevorrichtung entfernt ist und das Gehäuse vollständig mit der Vergussmasse gefüllt ist.

Die erfindungsgemäße Sensorvorrichtung 10 umfasst ein Gehäuse 12 mit einer horizontalen Gehäuse-Bodenwand 14, zwei sich in einer Querrichtung gegenüberstehenden vertikalen Gehäuse-Seitenwänden 16a,b und zwei sich in einer Längsrichtung gegenüberstehenden Gehäuse-Stirnwänden 18a,b. Die Gehäuse-Bodenwand 14, die beiden Gehäuse-Seitenwände 16a,b und die beiden Gehäuse-Stirnwände 18a,b definieren einen Gehäuse-Innenraum 20, der auf einer Gehäuse-Oberseite 22 offen ist. Das Gehäuse 12 kann beispielsweise aus Metall oder aus einer Hartplastik bestehen.

An der Gehäuse-Bodenwand 14 sind drei Befestigungssockel 24a-c ausgebildet, die vertikal in Richtung der Gehäuse-Oberseite 22 von der Gehäuse-Bodenwand 14 hervorstehen. In beiden gegenüberliegenden Gehäuse-Stirnwänden 18a,b ist jeweils ein Anschlussstecker 26a,b angeordnet, der durch die entsprechende Gehäuse-Stirnwand 18a,b hindurchragt und über den die Sensorvorrichtung 10 von außen elektrisch kontaktierbar ist.

In dem Gehäuse-Innenraum 20 ist ein Sensormodul 28 angeordnet, das eine Modulplatine 30 aufweist. Auf der Modulplatine 30 ist ein bewegungsempfindliches Sensorelement 32 angeordnet. Das Sensorelement 32 kann beispielsweise ein Beschleunigungssensor, ein Trägheitssensor oder ein Gyroskop sein. Im vorliegenden Ausführungsbeispiel weist das Sensormodul 28 ein einziges Sensorelement 32 auf. Es ist jedoch auch denkbar, dass auf der Modulplatine 30 mehrere Sensorelemente angeordnet sind. Auf der Modulplatine 30 ist ferner eine Auswerteelektronik 34 angeordnet, die elektrisch mit dem Sensorelement 32 sowie über nicht näher dargestellte Verbindungskabel mit den beiden Anschlusssteckern 26a,b verbunden ist.

Das Sensormodul 28 ist über drei Befestigungsmittel 36a-c auf den Befestigungssockeln 24a-c des Gehäuses 12 befestigt. Jedes Befestigungsmittel 36a-c ist hierbei sowohl an der Modulplatine 30 des Sensormoduls 28 als auch an einem Befestigungssockel 24a-c befestigt, typischerweise über eine Klebeverbindung. Die Befestigungsmittel 36a-c sind im vorliegenden Ausführungsbeispiel Scheiben-förmig mit einer Dicke von etwa 3 mm und bestehen aus einem viskoelastischen Polyurethan, im Speziellen aus Sorbothane mit einer Härte von 40 Shore 00. Die Befestigungsmittel 36a-c und insbesondere die Befestigungssockel 24a-c sind derart ausgebildet, dass das die Modulplatine 30 in etwa auf halber vertikaler Höhe des Gehäuse-Innenraums 20 positioniert ist und keinen direkten Kontakt zu dem Gehäuse 12 aufweist. Zum Schutz vor Feuchtigkeit ist das Sensormodul 28 mit einer Schutzschicht 37 beschichtet.

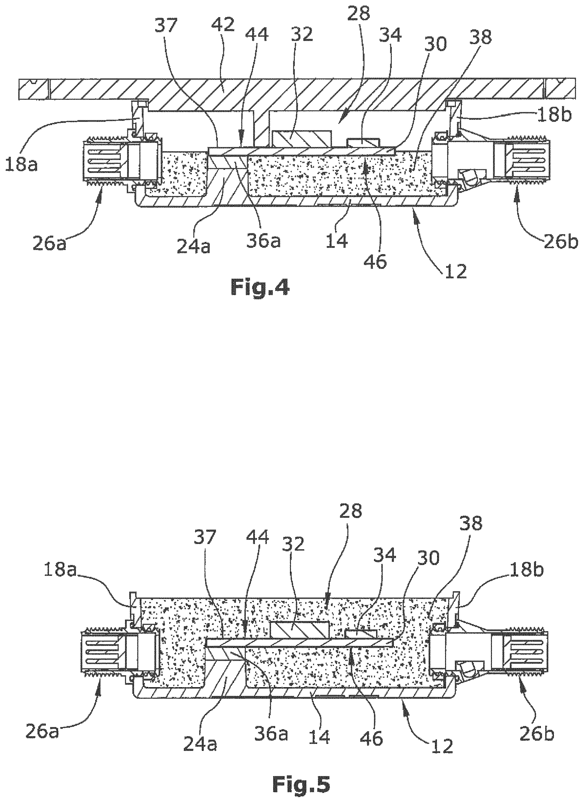

Der Gehäuse-Innenraum 20 ist im fertig montierten Zustand der erfindungsgemäßen Sensorvorrichtung 10, wie in Figur 5 dargestellt, mit einer Vergussmasse 38 gefüllt, die das Sensormodul 28 auf allen Seiten umschließt. Vorzugsweise ist der Gehäuse-Innenraum 20 im Wesentlichen vollständig mit der Vergussmasse 38 gefüllt. Die Vergussmasse 38 weist im ausgehärteten Zustand eine Härte auf, die größer ist als die Härte der Befestigungsmittel 36a-c und geringer ist als die Härte des Gehäuses 12. Im vorliegenden Ausführungsbeispiel besteht die Vergussmasse 38 aus einem Polybutadien und weist im ausgehärteten Zustand eine Härte von 25 Shore A bis 40 Shore A auf.

Erfindungsgemäß ist das Sensormodul 28 somit ausschließlich über die Vergussmasse 38 und die Befestigungsmittel 36a-c gelagert und somit kontaktfrei zu dem Gehäuse 12 in dem Gehäuse-Innenraum 20 angeordnet. Dadurch, dass die Vergussmasse 38 und die Befestigungsmittel 36a-c eine relativ geringe Härte aufweisen, ist das Sensormodul 28 schwingungstechnisch von dem Gehäuse 12 entkoppelt. Dies ermöglicht eine störungsfrei und zuverlässige Erfassung der physikalischen Größe durch die erfindungsgemäße Sensorvorrichtung 10, insbesondere auch in erschütterungsreichen Umgebungen.

Bei der Montage der erfindungsgemäßen Sensorvorrichtung 10 werden zuerst die Anschlussstecker 26a,b an dem Gehäuse 12 befestigt. Anschließend wird das noch nicht befestigte Sensormodul 28 über die nicht näher dargestellten Verbindungskabel elektrisch mit der Innenseite der Anschlussstecker 26a,b verbunden. Die freiliegenden Verbindungsstellen des Sensormoduls werden anschließend mit der Schutzschicht beschichtet. Das übrige Sensormodul 28 wird bereits vor der Montage mit der Schutzschicht beschichtet.

Im folgenden Montageschritt werden die Befestigungsmittel 36a-c an den entsprechenden Befestigungssockeln 24a-c befestigt, vorzugweise werden die Befestigungsmittel 36a-c an die Befestigungssockel 24a-c angeklebt.

Ferner werden die Verbindungskabel an der Gehäuse-Bodenwand 14 befestigt, vorzugsweise mit einem Klebeband.

Anschließend wird eine Positioniervorrichtung 40 an dem Gehäuse angebracht, über die das Sensormodul 28 beim Einsetzen in das Gehäuse 12 geführt wird. Das Sensormodul 28 wird durch die Positioniervorrichtung 40 lateral exakt in dem Gehäuse-Innenraum 20 positioniert und ausgerichtet. Insbesondere wird durch die Positioniervorrichtung 40 ein direkter Kontakt zwischen dem Sensormodul 28 und dem Gehäuse 12 verhindert. Das Sensormodul 28 wird in das Gehäuse 12 eingesetzt, wobei das Sensormodul 28 auf die Befestigungsmittel 36a-c aufgesetzt und an diesen befestigt wird, vorzugsweise über eine Klebeverbindung.

Um, insbesondere beim Einfüllen der Vergussmasse 38 in das Gehäuse 12, ein Abheben des Sensormoduls 28 von den Befestigungssockeln 24a-c zu verhindern, wird eine Haltevorrichtung 42 angebracht, die an einer den Befestigungsmitteln 36a-c gegenüberliegenden Oberseite 44 des Sensormoduls 28 anliegt. Die Haltvorrichtung 42 wird derart an dem Gehäuse 12 befestigt, dass das Sensormodul 28 durch die Haltevorrichtung 42 an die Befestigungsmittel 36a-c angepresst wird.

Nachfolgend wird der Gehäuse-Innenraum 20 in einem mehrstufigen Prozess mit der Vergussmasse 38 gefüllt. Zuerst wird die Positioniervorrichtung 40 entfernt. Anschließend wird in einem ersten Füllschritt Vergussmasse 38 in den Gehäuse-Innenraum 20 eingefüllt, bis eine Unterseite 46 des Sensormoduls 28 von der Vergussmasse 38 umschlossen ist. Der erste Füllschritt stoppt jedoch bevor die Vergussmasse 38 die Oberseite 44 des Sensormoduls 28 bedeckt. Anschließend wird die Vergussmasse 38 solange ausgehärtet, bis die Härte ausreichend groß ist, sodass das Sensormodul 28 von der Vergussmasse 38 gehalten wird und die Haltevorrichtung 42 entfernt werden kann.

Nachdem die Haltevorrichtung 42 entfernt ist, wird der Gehäuse-Innenraum 20 in einem zweiten Füllschritt im Wesentlichen vollständig mit Vergussmasse 38 gefüllt und die Vergussmasse 38 anschließend vollständig ausgehärtet.

### Bezugszeichenliste

- 10: Sensorvorrichtung
- 12: Gehäuse
- 14: Gehäuse-Bodenwand
- 16a,b: Gehäuse-Seitenwände
- 18a,b: Gehäuse-Stirnwände
- 20: Gehäuse-Innenraum
- 22: Gehäuse-Oberseite
- 24a-c: Befestigungssockel
- 26a,b: Anschlussstecker
- 28: Sensormodul
- 30: Modulplatine
- 32: Sensorelement
- 34: Auswerteelektronik
- 36a-c: Befestigungsmittel
- 37: Schutzschicht
- 38: Vergussmasse
- 40: Positioniervorrichtung
- 42: Haltevorrichtung
- 44: Sensormodul-Oberseite
- 46: Sensormodul-Unterseite

## Patentansprüche

1. Sensorvorrichtung (10) zur Erfassung einer physikalischen Größe, mit
- einem Gehäuse (12),
- einem Sensormodul (28), das in dem Gehäuse (12) angeordnet ist, mit
• einer Modulplatine (30) und
• mindestens einem bewegungsempfindlichen Sensorelement (32), das auf der Modulplatine (30) angeordnet ist,
- einer Vergussmasse (38), die das Gehäuse (12) mindestens teilweise ausfüllt und das Sensormodul (28) umschließt,
**dadurch gekennzeichnet, dass**
- mindestens ein Befestigungsmittel (36a-c) vorgesehen ist, über welches das Sensormodul (28) an dem Gehäuse (12) befestigt ist, und
- die Vergussmasse (38) im ausgehärteten Zustand eine Härte aufweist, die größer ist als die Härte des mindestens einen Befestigungsmittels (36a-c) und geringer ist als die Härte des Gehäuses (12).

2. Sensorvorrichtung (10) nach Anspruch 1, wobei das Sensormodul (28) innerhalb des Gehäuses (12) kontaktfrei zu dem Gehäuse (12) gelagert ist.

3. Sensorvorrichtung (10) nach einem der vorhergehenden Ansprüche, wobei in dem Gehäuse (12) mindestens ein Befestigungssockel (24a-c) vorgesehen ist, an dem das Sensormodul (28) über das mindestens eine Befestigungsmittel (36a-c) befestigt ist.

4. Sensorvorrichtung (10) nach einem der vorhergehenden Ansprüche, wobei das mindestens eine Befestigungsmittel (36a-c) eine Härte von maximal 45 Shore 00 aufweist.

5. Sensorvorrichtung (10) nach einem der vorhergehenden Ansprüche, wobei die Vergussmasse (38) eine Härte im Bereich von mindestens 20 Shore A und maximal 45 Shore A aufweist.

6. Sensorvorrichtung (10) nach einem der vorhergehenden Ansprüche, wobei das Sensormodul (28) mit einer Schutzschicht (37) beschichtet ist.

7. Verfahren zur Montage einer Sensorvorrichtung (10) nach einem der vorhergehenden Ansprüche mit den folgenden Verfahrensschritten:
- Einsetzen des Sensormoduls (28) in das Gehäuse (12), wobei das Sensormodul (28) über das mindestens eine Befestigungsmittel (36a-c) an dem Gehäuse (12) befestigt wird,
- Anbringen einer Haltevorrichtung (42), die an einer dem mindestens einen Befestigungsmittel (36a-c) gegenüberliegenden Oberseite (44) des Sensormoduls (28) anliegt und das Sensormodul (28) an das mindestens eine Befestigungsmittel (36a-c) anpresst,
- Einfüllen der Vergussmasse (38) in das Gehäuse,
- Entfernen der Haltevorrichtung (42).

8. Verfahren zur Montage einer Sensorvorrichtung (10) nach Anspruch 7, wobei das Sensormodul (28) mindestens beim Einsetzen in das Gehäuse (12) durch eine Positioniervorrichtung (40) ausgerichtet und positioniert wird.

9. Verfahren zur Montage einer Sensorvorrichtung (10) nach einem der Ansprüche 7 bis 8, mit den folgenden Verfahrensschritten:
- Einfüllen der Vergussmasse (38) in das Gehäuse (12) bis eine Sensormodul-Unterseite (46) jedoch nicht die Sensormodul-Oberseite (44) von der Vergussmasse (38) umschlossen ist,
- mindestens teilweises Aushärten der Vergussmasse (38),
- Entfernen der Haltevorrichtung (42),
- Einfüllen der Vergussmasse (38) mindestens bis das Sensormodul (28) vollständig von der Vergussmasse (38) umschlossen ist.

## Claims

1. Sensor device (10) for detecting a physical quantity, with
- a housing (12),
- a sensor module (28) which is arranged within the housing (12), with
• a module circuit board (30) and
• at least one motion-sensitive sensor element (32) which is arranged on the module circuit board (30),
- a potting compound (38) which at least partially fills the housing (12) and encloses the sensor module (28),
**characterized in that**
- at least one fastening means (36a-c) is provided, via which the sensor module (28) is fastened to the housing (12), and
- the potting compound (38) in the cured state has a hardness which is greater than the hardness of the at least one fastening means (36a-c) and is less than the hardness of the housing (12).

2. Sensor device (10) according to claim 1, wherein the sensor module (28) is supported within the housing (12) without contact to the housing (12).

3. Sensor device (10) according to one of the preceding claims, wherein at least one fastening pedestal (24a-c) is provided within the housing (12), to which fastening pedestal (24a-c) the sensor module (28) is fastened via the at least one fastening means (36a-c).

4. Sensor device (10) according to one of the preceding claims, wherein the at least one fastening means (36a-c) has a hardness of at most 45 Shore 00.

5. Sensor device (10) according to one of the preceding claims, wherein the potting compound (38) has a hardness in the range of at least 20 Shore A and at most 45 Shore A.

6. Sensor device (10) according to one of the preceding claims, wherein the sensor module (28) is coated with a protective layer (37).

7. Method for mounting a sensor device (10) according to one of the preceding claims, with the following method steps:
- inserting the sensor module (28) into the housing (12), wherein the sensor module (28) is fastened to the housing (12) via the at least one fastening means (36a-c),
- attaching a retaining device (42) which contacts a top side (44) of the sensor module (28) that is opposite the at least one fastening means (36a-c) and presses the sensor module (28) against the at least one fastening means (36a-c),
- filling the potting compound (38) into the housing,
- removing the retaining device (42).

8. Method for mounting a sensor device (10) according to claim 7, wherein the sensor module (28) is aligned and positioned by a positioning device (40) at least while inserting the sensor module (28) into the housing (12).

9. Method for mounting a sensor device (10) according to one of claims 7 to 8, with the following method steps:
- Filling the potting compound (38) into the housing (12) until a sensor module bottom side (46) but not the sensor module top side (44) is enclosed by the potting compound (38),
- at least partially curing the potting compound (38),
- removing the retaining device (42),
- filling in the potting compound (38) at least until the sensor module (28) is completely enclosed by the potting compound (38).

## Revendications

1. Appareil de détection (10) pour la détection d'une variable physique, avec
- un boîtier (12),
- un module de capteur (28), qui est disposé dans le boîtier (12), avec
- une platine de module (30) et
- au moins un élément de capteur (32) sensible au mouvement, qui est disposé sur la platine de module (30),
- une masse de moulage (38) qui remplit au moins partiellement le boîtier (12) et qui entoure le module de capteur (28),
**caractérisé en ce que**
- il est prévu au moins un moyen de fixation (36a-c) par lequel le module de capteur (28) est fixé au boîtier (12), et
- la masse de moulage (38) comprend, à l'état durci, une dureté qui est supérieure à la dureté de l'au moins un moyen de fixation (36a-c) et inférieure à la dureté du boîtier (12).

2. Appareil de détection (10) selon la revendication 1, dans lequel le module de détection (28) est monté à l'intérieur du boîtier (12) sans contact avec le boîtier (12).

3. Appareil de détection (10) selon l'une des revendications précédentes, dans lequel il est prévu dans le boîtier (12) au moins un socle de fixation (24a c) sur lequel le module de détection (28) est fixé par l'intermédiaire dudit au moins un moyen de fixation (36a-c).

4. Appareil de détection (10) selon l'une des revendications précédentes, dans lequel ledit au moins un moyen de fixation (36a-c) comprend une dureté maximale de 45 Shore 00.

5. Appareil de détection (10) selon l'une des revendications précédentes, dans lequel la masse de moulage (38) comprend une dureté comprise entre au moins 20 Shore A et au maximum 45 Shore A.

6. Appareil de détection (10) selon l'une des revendications précédentes, dans lequel le module de détection (28) est revêtu d'une couche de protection (37).

7. Méthode de montage d'un appareil de détection (10) selon l'une des revendications précédentes avec les étapes suivantes du procédé :
- Mise en place du module de détection (28) dans le boîtier (12), le module de détection (28) étant fixé au boîtier (12) par le au moins un moyen de fixation (36a-c),
- mise en place d'un dispositif de maintien (42) qui s'applique contre une face supérieure (44) du module de détection (28) opposée à l'au moins un moyen de fixation (36a-c) et qui presse le module de détection (28) contre l'au moins un moyen de fixation (36a-c),
- Remplissage de la masse de moulage (38) dans le boîtier,
- retrait du dispositif de retenue (42).

8. Méthode de montage d'un appareil de détection (10) selon la revendication 7, dans laquelle le module de détection (28) est orienté et positionné par un dispositif de positionnement (40) au moins lors de son insertion dans le boîtier (12).

9. Méthode de montage d'un appareil de détection (10) selon l'une des revendications 7 à 8, avec les étapes suivantes du procédé :
- Versement de la masse de moulage (38) dans le boîtier (12) jusqu'à ce qu'une face inférieure (46) du module de détection mais pas la face supérieure (44) du module de détection soit entourée par la masse de moulage (38),
- durcissement au moins partiel de la masse de moulage (38),
- retrait du dispositif de maintien (42),
- remplissage de la masse de moulage (38) au moins jusqu'à ce que le module de capteur (28) soit complètement entouré par la masse de moulage (38).
